## Europäisches Patentamt

## European Patent Office

## Office européen des brevets

(19)

(11) **EP 0 520 233 B1**

(12) **EUROPÄISCHE PATENTSCHRIFT**

(45) Veröffentlichungstag und Bekanntmachung des
Hinweises auf die Patenterteilung:
**15.05.1996 Patentblatt 1996/20**

(51) Int Cl.⁶: **G05B 13/04**

(21) Anmeldenummer: **92109691.3**

(22) Anmeldetag: **09.06.1992**

(54) **Einrichtung zur Identifikation einer Übertragungsstrecke**

Arrangement for identification of a controlled system

Dispositif pour l'identification d'un système commandé

(84) Benannte Vertragsstaaten:
**AT BE CH DE ES FR GB IT LI NL SE**

(30) Priorität: **24.06.1991 DE 4120796**

(43) Veröffentlichungstag der Anmeldung:
**30.12.1992 Patentblatt 1992/53**

(73) Patentinhaber: **SIEMENS
AKTIENGESELLSCHAFT
D-80333 München (DE)**

(72) Erfinder: **Preuss, Hans-Peter, Dr.-Ing.
W-7500 Karlsruhe 21 (DE)**

(56) Entgegenhaltungen:
**DE-A- 3 141 560          DE-A- 3 721 184
DE-A- 3 839 878          DE-A- 3 929 615
GB-A- 1 436 758**

**Beschreibung**

Die Erfindung bezieht sich auf eine Einrichtung zur Identifikation einer Übertragungsstrecke nach dem Oberbegriff des Anspruchs 1 sowie auf eine Einrichtung zur Identifikation einer Regelstrecke nach dem Oberbegriff des Anspruchs 4.

Eine Identifikation bei adaptiven Reglern ist aus der DE-OS 39 29 615 bekannt. Ein adaptiver Regler besitzt die Fähigkeit, seine Parameter selbsttätig den sich zeitlich ändernden Eigenschaften einer Regelstrecke anzupassen. Dazu sind eine Methode zur Erfassung und Auswertung verfügbarer Prozeßinformation sowie ein geeignetes Verfahren zur prozeßmodellgestützten Auslegung des Reglers erforderlich. Es wird als Verfahren zur Lösung des Problems der simulationsmodellgestützte Reglerentwurf angegeben. Dieser erfordert in einem ersten Schritt die Ermittlung eines geeigneten Simulationsmodells der Strecke, um in einem zweiten Schritt die Parameter eines Reglers auf der Basis des an die Strecke angenäherten Simulationsmodells nachzustellen. Zu einer wiederholten Adaption, d. h. Anpassung des Reglers an die Streckenparameter, gehört ein Auslösemechanismus, der die Adaption unter definierten Bedingungen in Gang setzt. Betrachtet werden dort einschleifige Regelkreise mit Reglern vom PID-Typ. Die zu regelnden Strecken zeigen ein Verhalten mit Ausgleich, d. h., sie stellen eine Regelstrecke dar, bei der die Sprungantwort in einen neuen Beharrungszustand einläuft. Gleichwohl treten Regelstrecken auf, die im interessierenden Betriebsbereich keinen Ausgleichszustand annehmen. Der Füllstand eines Tanks oder der Drehwinkel einer Motorwelle sind typische Beispiele dafür.

Aus der DE-OS 31 41 560 sind ein Verfahren und eine Vorrichtung zur Prozeßsteuerung und -regelung bekannt, bei welchen Stufenveränderungen des Sollwerts für den Prozeß zu seiner Identifikation ausgeführt werden.

Der Erfindung liegt die Aufgabe zugrunde, eine Einrichtung zur Identifikation einer Übertragungsstrecke ohne Ausgleich, insbesondere einer Regelstrecke, sowie einen adaptiven Regler für derartige Strecken zu schaffen.

Zur Lösung dieser Aufgabe weist die neue Einrichtung erfindungsgemäß die im kennzeichnenden Teil des Anspruchs 1 bzw. des Anspruchs 4 genannten Merkmale auf. Die Identifikation ist besonders einfach durchzuführen, wenn das Eingangssignal die Form eines Rechteckimpulses gemäß Anspruch 2 aufweist. Die Einrichtung gemäß Anspruch 2 führt schon nach einer relativ geringen Anzahl von Variationsschritten zu optimalen Modellparametern, da lediglich der Parameter n variiert werden muß und die weiteren Parameter K und T direkt aus den Verläufen von Eingangs- und Ausgangssignal der Übertragungsstrecke sowie dem derzeit gewählten Parameter n ermittelt werden können. Die Einrichtung ist besonders vorteilhaft, wenn sie gemäß Anspruch 3 in einem von Hand- auf Automatikbetrieb umschaltbaren Regelkreis oder gemäß Anspruch 4 in einem geschlossenen Regelkreis eingesetzt wird. Mit den Einstellungen der Reglerparameter nach den Ansprüchen 5 bis 8 kann ein gutes Regelverhalten des adaptiven Reglers erreicht werden.

Die Erfindung hat den Vorteil, daß sich die erfindungsgemäße Einrichtung mit relativ geringem Aufwand von der bei Strecken mit Ausgleich bewährten ableiten läßt.
Weiterhin sind die Bestimmungsgleichungen für die Parameter des Simulationsmodells überraschend einfach. Das bewährte Reglerentwurfsverfahren nach dem Betragsoptimum führt bei guten Regelungseigenschaften zu analytischen Einstellregeln, die für adaptive Regler vorteilhaft einsetzbar sind. Der erfindungsgemäße adaptive Regler führt zu einem gleichermaßen guten Führungs- und Störverhalten.

Anhand der Zeichnungen werden im folgenden die Erfindung sowie Ausgestaltungen und Vorteile näher erläutert. Es zeigen

Figur 1 ein Blockschaltbild eines Regelkreises mit einer Identifikationseinrichtung und
Figur 2 ein Blockschaltbild der Identifikationseinrichtung.

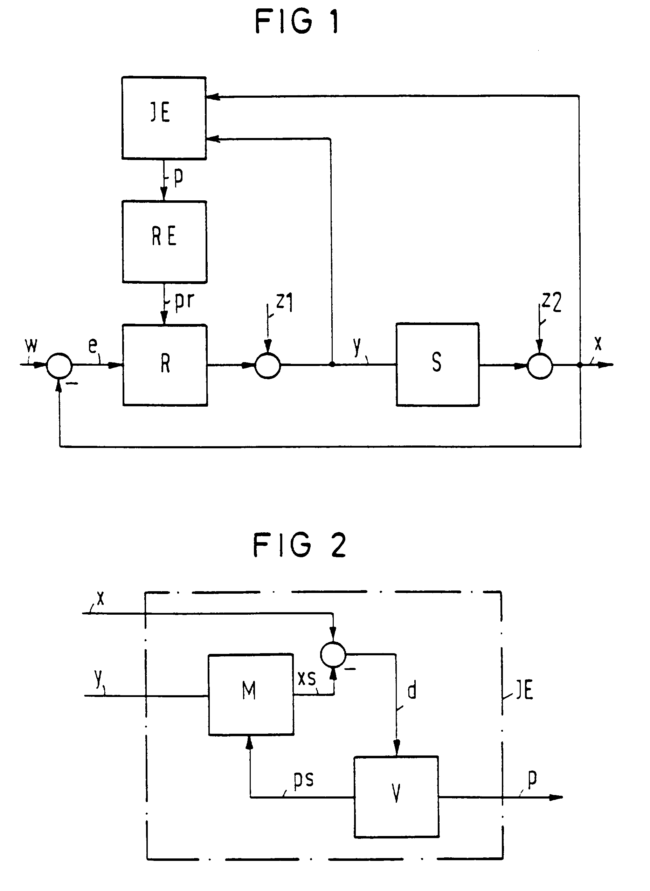

In dem Regelkreis in Figur 1 wird eine Übertragungsstrecke S, deren Parameter p mit einer Identifikationseinrichtung IE ermittelt werden, durch eine Regelstrecke gebildet. An dieser liegt ein Eingangssignal y, das im Regelkreis identisch mit der Stellgröße ist, an. Die Stellgröße y wird von einem Regler R geliefert, dessen Reglerparameter pr mit Hilfe einer Reglerentwurfseinrichtung RE aus den Parametern p ermittelt werden. Im Handbetrieb des Reglers R ist es möglich, einen vorwählbaren Verlauf der Stellgröße y an die Regelstrecke S anzulegen. Im Störfall ist der Stellgröße y noch eine erste Störgröße $z_1$ hinzuaddiert. Einem Ausgangssignal x der Regelstrecke S, das im Regelkreis die Regelgröße darstellt, wird im Störfall noch eine zweite Störgröße $z_2$ überlagert. Das Eingangssignal y sowie das Ausgangssignal x sind der Identifikationseinrichtung IE zugeführt. Durch Differenzbildung wird aus einer Führungsgröße w und dem Ausgangssignal x eine Regeldifferenz e gebildet, die am Regler R anliegt. Im Automatikbetrieb bildet der Regler R die Stellgröße y in Abhängigkeit von der Regeldifferenz e, d. h., der Regelkreis ist geschlossen.

Figur 2 zeigt ein detaillierteres Blockschaltbild der Identifikationseinrichtung IE. Das Eingangssignal y der Übertragungsstrecke S wird zusätzlich einem Modell M zur Simulation des Verhaltens der Übertragungsstrecke S zugeführt. Das Simulationsmodell M liefert ein geschätztes Ausgangssignal xs, das mit dem realen Ausgangssignal x zur Ermittlung einer Abweichung d, z. B. durch Differenzbildung, verglichen wird. Eine Variationseinrichtung V, welche diese Abweichung d als Eingangssignal erhält, liefert zu ihrer Minimierung geschätzte Parameter ps an das Simulationsmodell M sowie die als optimal ermittelten Parameter p an die Reglerentwurfseinrichtung RE. Auf diese Weise kann eine Minimierung durchgeführt werden, ohne den Betrieb des Reglers R zu beeinträchtigen.

Natürlich können Identifikationseinrichtung IE, Reglerentwurfseinrichtung RE und Regler R als Operationsverstärkerschaltung in analoger Art oder als Rechenschaltung in digitaler Art, aber auch hybrid ausgeführt werden.

Die Übertragungsstrecke S wird üblicherweise im Laplace-Bereich durch eine Übertragungsfunktion G(s) beschrieben. Sie lautet für ein I-$T_n$-Modell:

$$G(s) = \frac{K}{s \, (1 + T \, s)^n}. \tag{1}$$

Darin stellen l/K eine Integrationszeit, T eine Verzögerung und n die Ordnung eines Verzögerungsgliedes dar. Der Faktor l/s in der Übertragungsfunktion G(s) bedeutet, daß das Modell der Übertragungsstrecke einen integrierenden Anteil aufweist. Der Sonderfall eines reinen I-Modells liegt für T = O vor:

$$G(s) = \frac{K}{s}. \tag{2}$$

Ersetzt man T durch $T_t/n$ und bildet den Grenzwert für $n \to \infty$, so erhält man aus Gleichung (l) ein I-$T_t$-Glied mit der Totzeit $T_t$:

$$G(s) = \frac{K}{s} \, e^{-T_t \, s}. \tag{3}$$

Für Übertragungsstrecken S ohne Ausgleich ist der einmalige Stellgrößensprung, etwa im Handbetrieb des Reglers, keine zur Identifikation der Parameter geeignete Anregungsfunktion. Erfindungsgemäß wird daher ein impulsförmiger Verlauf des Eingangssignals y gewählt, so daß die Anregung nach einer bestimmten Zeit wieder verschwindet und die Ausgangsgröße x einem stationären Endwert $x_E$ zustrebt. Einen solchen impulsförmigen Verlauf erhält man insbesondere aus der Überlagerung eines positiven und eines zeitlich versetzten negativen Sprungs von gleichem Betrag als Rechteckfunktion:

$$y(t) = a \, \sigma \, (t) - a \, \sigma \, (t - b). \tag{4}$$

Darin bedeuten a die Höhe einer Einheitssprungfunktion $\sigma(t)$ und b die Breite des Rechteckimpulses.

Die Generierung eines solchen Eingangssignals y kann mit geeigneten Mitteln im Regler R erfolgen. Die Breite b und die Höhe a des Rechteckimpulses werden durch die maximal zulässige Änderung des Ausgangssignals x begrenzt.

Die Antwort eines durch Gleichung (l) beschreibbaren Modells auf das rechteckförmige Eingangssignal ist ein Signalverlauf nach Art der Sprungantwort einer Strecke mit Ausgleich. Da die Anregung nach der Impulsdauer wieder gänzlich verschwunden ist, kann das Ausgangssignal x auf einen stationären Wert $x_E$ einschwingen. Die Modellparameter K, n, T können im offenen Regelkreis ermittelt werden, indem man eine Auswertung des stationären Endwerts $x_E$ sowie der Fläche zwischen stationärem Endwert und dem Ausgangssignal x(t) als Antwort auf das Eingangssignal y(t) vornimmt. Der stationäre Endwert $x_E$, dem das Ausgangssignal x(t) als Folge der Rechteckanregung zustrebt, kann berechnet werden zu:

$$x_E = a \, b \, K. \tag{5}$$

Damit gilt:

$$K = \frac{x_E}{a \, b}, \tag{6}$$

wobei der Nenner der vom Verlauf des Eingangssignals y(t) eingeschlossenen Fläche entspricht.

Zwischen dem Endwert $x_E$ und dem Verlauf des Ausgangssignals x(t) als Antwort der Übertragungsstrecke S auf den Rechteckimpuls als Eingangssignal y(t) wird eine Fläche F eingeschlossen. sen. Diese kann berechnet werden zu:

$$F = \frac{a \, b \, K \, (2 \, n \, T + b)}{2}. \tag{7}$$

Hat man die Fläche F anhand des Ausgangssignals x(t) ermittelt, so kann man wegen des vorab bestimmten Parameters K und der bekannten Parameter a, b der Rechteckanregung nach T auflösen:

$$T = (\frac{F}{a \, b \, K} - \frac{b}{2}) \frac{l}{n} = \frac{c}{n}. \tag{8}$$

Zur erfindungsgemäßen Ermittlung der beiden Parameter T und n kann man nun n ganzzahlig variieren und T gemäß Gleichung (8) berechnen oder T ebenfalls variieren und die bereits aus der DE-OS 39 29 615 bekannte Vorgehensweise anwenden, die auch zur Parameteridentifikation in einem geschlossenen Regelkreis geeignet ist.

Der Parameter K kann auch für ein I-$T_t$-Modell nach Gleichung (3) mit Gleichung (6) bestimmt werden. Die Fläche zwischen dem Endwert $x_E$ und dem Verlauf des Ausgangssignals x(t) beträgt bei dem Rechteckimpuls gemäß Gleichung (4) als Verlauf des Eingangssignals y(t):

$$F = \frac{a\,b^2}{2}\,K + a\,b\,K\,T_t. \tag{9}$$

Diese Gleichung wird nach $T_t$ aufgelöst:

$$T_t = \frac{F}{a\,b\,K} - \frac{b}{2}. \tag{10}$$

Im geschlossenen Regelkreis kann der optimale Parameter $T_t$ durch Variation und Minimierung der Abweichungen ermittelt werden.

Ebenso kann bei einem I-$T_n$-Modell im geschlossenen Regelkreis die Flächenberechnung nach Gleichung (7) nicht zur Ermittlung der optimalen Parameter eingesetzt werden, da sich durch Überschwingen positive und negative Flächenanteile gegeneinander aufheben und somit die Fläche F nach einem Sprung der Führungsgröße w verschwindet. Statt dessen wird in diesem Fall die Fläche Fy unter dem Stellgrößenverlauf y(t) bei einem Sprung der Führungsgröße von einem Anfangswert $w_A$ zu einem Endwert $w_E$ ausgewertet. Daraus kann der Parameter K berechnet werden zu:

$$K = \frac{w_E - w_A}{Fy}. \tag{11}$$

Da man die Anfangs- und Endwerte $w_A$ und $w_E$ der Führungsgröße bzw. die ihnen entsprechenden Stationärwerte $x_A$ und $x_E$ der Regelgröße leicht erfassen und die Fläche Fy aus dem abgespeicherten Stellgrößenverlauf durch numerische Integration gewinnen kann, ist der Parameter K leicht zu bestimmen.

Bei Vorhandensein einer zunächst als konstant angenommenen Störung $z_1$ hat die Stellgröße y im eingeschwungenen Zustand nicht den Wert O, sondern es gilt $y = -z_1$. Vor der numerischen Integration der Stellgröße y(t) zur Berechnung der Fläche Fy muß deshalb von allen abgespeicherten Stellgrößenwerten der Anfangswert abgezogen werden. Will man auch noch im Fall einer veränderlichen Störgröße $z_1$ eine einigermaßen genaue Flächenberechnung erreichen, kann man von den gespeicherten Stellwerten statt des Anfangswertes denjenigen Wert abziehen, der jeweils auf der Verbindungslinie zwischen Anfangs- und Endwert des Stellgrößenverlaufs liegt.

Die weitere Vorgehensweise bei der Identifikation im geschlossenen Kreis erfordert eine sich der wiederholten Simulation bedienende numerische Optimierung der verbleibenden Modellparameter n, T, wie sie bereits aus der DE-OS 39 29 615 bekannt ist.

Immer dann, wenn - wie beim I-$T_n$-Modell - die Übertragungsstrecke bereits ein I-Glied enthält, wird man ohne besondere Anforderung keinen PI- oder PID-Regler verwenden. Schließlich erzeugen zwei I-Glieder im offenen Kreis eine Anfangsphase von -180°, wodurch die Sicherstellung einer ausreichenden Phasenreserve bei der Durchtrittsfrequenz schwierig werden kann. So kann man im einfachsten Fall schon mit einem P-Regler

$$R(s) = K_p \tag{12}$$

ein befriedigendes und vor allem stationär genaues Führungsverhalten erzielen. Die Anwendung des Betragsoptimums als Entwurfsprinzip auf einen Regelkreis mit I-$T_n$-Strecke und P-Regler liefert nach kurzer Rechnung die Einstellvorschrift:

$$K_p = \frac{1}{2\,n\,K\,T}. \tag{13}$$

Für I-$T_t$-Strecken kann daraus mit der bereits beschriebenen Grenzwertbetrachtung sofort die betragsoptimale P-Reglereinstellung ermittelt werden zu:

$$K_p = \frac{1}{2\,K\,T_t}. \tag{14}$$

Bei Verzicht auf den I-Anteil eines PID-Reglers bleibt als Alternative zum P-Regler nur noch der PD-Regler:

$$R(s) = K_p\,(1 + s\,T_v). \tag{15}$$

Die Einstellregeln für seine Parameter werden mit dem Betragsoptimum ermittelt zu:

$$K_p = \frac{3}{4\,K\,T\,(n-1)}, \tag{16}$$

$$T_v = \frac{T\,(n+2)}{3}. \tag{17}$$

Ersichtlich sind diese Einstellregeln nur für n > 1 geeignet, da im Nenner der Ausdruck "n - 1" steht.

Daraus sind wieder die Einstellregeln für einen PD-Regler bei I-$T_t$-Modell ableitbar:

$$K_p = \frac{3}{4\,K\,T_t}, \tag{18}$$

$$T_v = \frac{T_t}{3}. \tag{19}$$

Ohne I-Anteil kommt man allerdings im Regler unter Umständen nicht mehr aus, wenn das Störverhalten des Regelkreises eine Rolle spielt. Dabei ist gemäß Figur 1 zwischen einer ersten Störgröße $z_1$ am Eingang der Übertragungsstrecke S und einer zweiten Störgröße $z_2$ an ihrem Ausgang zu unterscheiden. Bei Strecken ohne Ausgleich vermögen Regler ohne I-Anteil konstante Störungen nur dann stationär auszuregeln, wenn diese am Ausgang der Übertragungsstrecke S als zweite Störgröße $z_2$ einwirken. Bei sprungförmiger erster Störgröße $z_1$ wird das Ausgangssignal x jedoch auch stationär verfälscht. Die Störgrößen $z_1$, $z_2$ werden jedoch immer stationär ausgeregelt bei Verwendung eines PI(D)-Reglers:

$$R(s) = K_p \left(1 + \frac{1}{T_N s} + T_v s\right). \tag{20}$$

Ein typisches Beispiel für geregelte I-Strecken, bei denen Störungen eine bleibende Regelabweichung verursachen würden, wenn ein Regler ohne I-Anteil zum Einsatz käme, sind Behälterstandsregelungen, wie sie in der Praxis recht zahlreich vorkommen. Hier wirkt ein Ablauf wie eine erste Störgröße $z_1$ auf die Regelgröße Füllstand. PI(D)-Regler können also auch bei Strecken mit I-Anteil durchaus ihre Berechtigung haben.

Für ein I-$T_n$-Modell können die Parameter eines PI-Reglers nach einem modifizierten Betragsoptimum ermittelt werden zu:

$$T_N = T \left(2n + \sqrt{2n(n+1)}\right), \tag{21}$$

$$K_p = \frac{2}{K T_N}. \tag{22}$$

Für das I-$T_t$-Modell lauten sie:

$$T_N = T_t (2 + \sqrt{2}), \tag{23}$$

$$K_p = \frac{2}{K T_N}. \tag{24}$$

Bei einem PID-Regler und I-$T_n$-Modell können die Parameter bevorzugt wie folgt eingestellt werden:

$$T_N = T \frac{10n^2 + 6n - 4 + \sqrt{34n^4 + 90n^3 + 58n^2 - 18n - 20}}{6(n+1)}, \tag{25}$$

$$T_v = 2nT - \frac{T_N}{2} - \frac{n(n-1)T^2}{T_N}, \tag{26}$$

$$K_p = \frac{2}{K(T_N - 2T_v)}. \tag{27}$$

Daraus sind wieder die Reglerparameter für ein I-$T_t$-Modell ermittelbar:

$$K_p = \frac{0{,}98}{K T_t}, \tag{28}$$

$$T_N = 2{,}64 T_t, \tag{29}$$

$$T_v = 0{,}30 T_t. \tag{30}$$

Natürlich können die hier angegebenen Einstellregeln mit geeigneten Näherungsmethoden für die Anwendung noch vereinfacht werden, ohne daß Führungs- und Störverhalten wesentlich beeinträchtigt werden müssen.

**Patentansprüche**

1. Einrichtung zur Identifikation einer Übertragungsstrecke (S), insbesondere einer Regelstrecke im Handbetrieb, wobei Ein- und Ausgangssignale (y, x) der Übertragungsstrecke (S) erfaßt werden, die Eingangssignale (y) einem Simulationsmodell (M) der Übertragungsstrecke (S) zur Ermittlung geschätzter Ausgangssignale (xs) zugeführt werden und die Parameter (p) des Simulationsmodells (M) ermittelt werden, mit denen die Abweichungen (d) zwischen den erfaßten Ausgangssignalen (x) und den mit Hilfe des Simulationsmodells (M) geschätzten Ausgangssignalen (xs) minimal sind, **dadurch gekennzeichnet,**

   - daß die Übertragungsstrecke (S) einen integrierenden Anteil aufweist,
   - daß das Simulationsmodell (M) der Übertragungsstrecke (S) ein I-$T_n$-Modell oder ein I-$T_t$-Modell ist,
   - daß Mittel zum Erzeugen eines impulsförmigen Eingangssignals (y) vorgesehen sind und
   - daß der Verstärkungsparameter K des Simulationsmodells (M) als der Quotient aus der Differenz zwischen stationärem Endwert und Anfangswert des Ausgangssignals (x) und der Fläche, welche der impulsförmige Verlauf des Eingangssignals (y) einschließt, ermittelt wird.

**2.** Einrichtung nach Anspruch 1, **dadurch gekennzeichnet,**

- daß die Mittel ein Eingangssignal (y) mit der Form eines Rechteckimpulses erzeugen,
- daß im Fall eines I-$T_n$-Modells die Parameter n und T des Simulationsmodells (M) derart gewählt werden, daß die Gleichung

$$T = \left( \frac{F}{a\,b\,K} - \frac{b}{2} \right) \frac{1}{n}$$

gilt, und
- daß im Fall eines I-$T_t$-Modells der Parameter $T_t$ derart gewählt wird, daß die Gleichung

$$T_t = \frac{F}{a\,b\,K} - \frac{b}{2}$$

gilt,
wobei
- F die Fläche zwischen stationärem Endwert und gemessenem Verlauf des Ausgangssignals (x) ab Anfangszeitpunkt des Eingangsimpulses,
- a die Höhe des Eingangsimpulses und
- b die Breite des Eingangsimpulses sind.

**3.** Einrichtung nach Anspruch 1 oder 2, **dadurch gekennzeichnet,**

- daß das Eingangssignal (y) die Stellgröße und das Ausgangssignal (x) die Regelgröße in einem von Hand-auf Automatikbetrieb umschaltbaren Regelkreis ist, in dem der Übertragungsstrecke (S) ein Regler (R) vorgeschaltet ist, dessen Regelparameter für Automatikbetrieb an die im Handbetrieb ermittelten Parameter (p) des Simulationsmodells (M) angepaßt werden.

**4.** Einrichtung zur Identifikation einer Regelstrecke (S) in einem geschlossenen Regelkreis, in dem der Regelstrecke (S) ein Regler (R) vorgeschaltet ist, wobei Ein- und Ausgangssignale (y, x) der Regelstrecke (S) erfaßt werden, die Eingangssignale (y) einem Simulationsmodell (M) der Regelstrecke (S) zur Ermittlung geschätzter Ausgangssignale (xs) zugeführt werden und die Parameter (p) des Simulationsmodells (M) ermittelt werden, mit denen die Abweichungen (d) zwischen den erfaßten Ausgangssignalen (x) und den mit Hilfe des Simulationsmodells (M) geschätzten Ausgangssignalen (xs) minimal sind, **dadurch gekennzeichnet**,

- daß die Regelstrecke (S) einen integrierenden Anteil aufweist,
- daß das Simulationsmodell (M) der Regelstrecke (S) ein I-$T_n$-Modell oder ein I-$T_t$-Modell ist und
- daß der Verstärkungsparameter K des Simulationsmodells (M) als der Quotient aus der Differenz zwischen stationärem Endwert und Anfangswert der Führungsgröße (w) und der Fläche, welche der Verlauf des Eingangssignals (y) nach einem Sprung der Führungsgröße (w) einschließt, ermittelt wird.

**5.** Einrichtung nach Anspruch 3 oder 4, **dadurch gekennzeichnet,**

- daß im Falle eines I-$T_n$-Modells bei einem P-Regler dessen Parameter $K_p$ auf den Wert

$$K_p = \frac{1}{2\,n\,K\,T}$$

- und im Falle eines I-$T_t$-Modells auf den Wert

$$K_p = \frac{1}{2\,K\,T_t}$$

eingestellt wird.

**6.** Einrichtung nach Anspruch 3 oder 4, **dadurch gekennzeichnet**,

- daß im Falle eines I-$T_n$-Modells mit n > 1 bei einem PD-Regler dessen Parameter $K_p$ auf den Wert

$$K_p = \frac{3}{4\,K\,T(n-1)}$$

und dessen Parameter $T_v$ auf den Wert

$$T_v = \frac{T(n+2)}{3}$$

- und im Falle eines I-$T_t$-Modells der Parameter $K_p$ auf den Wert

$$K_p = \frac{3}{4\,K\,T_t}$$

und der Parameter $T_v$ auf den Wert

$$T_v = \frac{T_t}{3}$$

eingestellt werden.

**7.** Einrichtung nach Anspruch 3 oder 4, **dadurch gekennzeichnet**,

- daß im Falle eines I-$T_n$-Modells bei einem PI-Regler dessen Parameter $T_N$ auf den Wert

$$T_N = T\left(2\,n + \sqrt{2\,n\,(n+1)}\right)$$

und dessen Parameter $K_p$ auf den Wert

$$K_p = \frac{2}{K \cdot T_N}$$

- und im Falle eines I-$T_t$-Modells der Parameter $T_N$ auf den Wert

$$T_N = T_t(2 + \sqrt{2})$$

und der Parameter $K_p$ auf den Wert

$$K_p = \frac{2}{K T_N}$$

eingestellt werden.

**8.** Einrichtung nach Anspruch 3 oder 4, **dadurch gekennzeichnet**,

- daß im Falle eines I-$T_n$-Modells bei einem PID-Regler dessen Parameter $K_p$, $T_N$ und $T_v$ auf die Werte

$$T_N = T\,\frac{10\,n^2 + 6\,n - 4 + \sqrt{34\,n^4 + 90\,n^3 + 58\,n^2 - 18\,n - 20}}{6\,(n+1)},$$

$$T_v = 2\,n\,T - \frac{T_N}{2} - \frac{n\,(n-1)\,T^2}{T_N}$$

und

$$K_p = \frac{2}{K\,(T_N - 2\,T_v)}$$

- und im Falle eines I-$T_t$-Modells auf die Werte

$$K_p = \frac{0,98}{K\,T_t},$$

$$T_N = 2,64\ T_t$$

und

$$T_v = 0,30\ T_t$$

eingestellt werden.

## Claims

**1.** Device for identifying a transmission system (S), in particular a controlled system in manual operation, with input and output signals (y, x) of the transmission system (S) being detected, the input signals (y) being supplied to a simulation model (M) of the transmission system (S) to determine estimated output signals (xs) and the parameters (p) of the simulation model (M) being determined, with which the deviations (d) between the detected output signals (x) and the output signals (xs) estimated with the aid of the simulation model (M) are minimal, characterized in that

- the transmission system (S) has an integrating component,

- the simulation model (M) of the transmission system (S) is an I-$T_n$ model or an I-$T_t$ model,
- means for generating a pulse-shaped input signal (y) are provided, and
- the amplification parameter K of the simulation model (M) is determined as the quotient from the difference between the stationary final value and the starting value of the output signal (x) and the area which is enclosed by the pulse-shaped characteristic of the input signal (y).

2. Device according to claim 1, characterized in that

- the means generate an input signal (y) with the form of a square-wave pulse,
- in the event of an I-$T_n$ model the parameters n and T of the simulation model (M) are selected in such a way that the following equation applies:

$$T = \left[ \frac{F}{a\,b\,K} - \frac{b}{2} \right] \frac{1}{n}$$

and
- in the event of an I-$T_t$ model the parameter $T_t$ is selected in such a way that the following equation applies:

$$T_t = \frac{F}{a\,b\,K} - \frac{b}{2}$$

whereby
- F is the area between the stationary final value and the measured characteristic of the output signal (x) from the starting instant of the input pulse,
- a is the height of the input pulse and
- b is the width of the input pulse.

3. Device according to claim 1 or 2, characterized in that the input signal (y) is the manipulated variable and the output signal (x) is the controlled variable in a control circuit which can be switched over from manual operation to automatic operation, in which control circuit a controller (R) is connected in series with the transmission system (S), the control parameters of which controller (R) for automatic operation are adapted to the parameters (p) of the simulation model (M) determined in manual operation.

4. Device for identifying a controlled system (S) in a closed control circuit, in which a controller (R) is connected in series with the controlled system (S), with input and output signals (y, x) of the controlled system (S) being detected, the input signals (y) being supplied to a simulation model (M) of the controlled system (S) to determine estimated output signals (xs) and the parameters (p) of the simulation model (M) being determined, with which the deviations (d) between the detected output signals (x) and the output signals (xs) estimated with the aid of the simulation model (M) are minimal, characterized in that

- the controlled system (S) has an integrating component,
- the simulation model (M) of the controlled system (S) is an I-$T_n$ model or an I-$T_t$ model, and
- the amplification parameter K of the simulation model (M) is determined as the quotient from the difference between the stationary final value and the starting value of the reference variable (w) and the area which is enclosed by the characteristic of the input signal (y) after a sudden change of the reference variable (w).

5. Device according to claim 3 or 4, characterized in that in the case of an I-$T_n$ model with a P-controller, its parameter $K_p$ is adjusted to the value

$$K_p = \frac{1}{2\,n\,K\,T}$$

and in the case of an I-$T_t$ model it is adjusted to the value

$$K_p = \frac{1}{2\,K\,T_t}.$$

6. Device according to claim 3 or 4, characterized in that in the case of an I-$T_n$ model where n > 1 with a PD-controller, its parameter $K_p$ is adjusted to the value

$$K_p = \frac{3}{4\,K\,T\,(n-1)}$$

and its parameter $T_v$ is adjusted to the value

$$T_v = \frac{T\ (n+2)}{3}$$

and in the case of an I-$T_t$ model the parameter $K_p$ is adjusted to the value

$$K_p = \frac{3}{4\ K\ T_t}$$

and the parameter $T_v$ is adjusted to the value

$$T_v = \frac{T_t}{3}.$$

**7.** Device according to claim 3 or 4, characterized in that in the case of an I-$T_n$ model with a PI-controller, its parameter $T_N$ is adjusted to the value

$$T_N = T(2n + \sqrt{2n\ (n+1)}\ )$$

and its parameter $K_p$ is adjusted to the value

$$K_p = \frac{2}{K \cdot T_N}$$

and in the case of an I-$T_t$ model the parameter $T_N$ is adjusted to the value

$$T_N = T_t\ (2 + \sqrt{2})$$

and the parameter $K_p$ is adjusted to the value

$$K_p = \frac{2}{K\ T_N}.$$

**8.** Device according to claim 3 or 4, characterized in that in the case of an I-$T_n$ model with a PID controller, its parameters $K_p$, $T_N$ and $T_v$ are adjusted to the values

$$T_N = T\ \frac{10n^2 + 6n - 4 + \sqrt{34n^4 + 90n^3 + 58n^2 - 18n - 20}}{6\ (n+1)},$$

$$T_v = 2\ n\ T - \frac{T_N}{2} - \frac{n\ (n-1)\ T^2}{T_N}$$

and

$$K_p = \frac{2}{K\ (T_N - 2\ T_v)}$$

and in the case of an I-$T_t$ model to the values

$$K_p = \frac{0.98}{K\ T_t},$$

$$T_N = 2.64\ T_t$$

and

$$T_v = 0.30\ T_t.$$

## Revendications

**1.** Dispositif d'identification d'une voie (S) de transmission, notamment d'un système réglé en fonctionnement manuel, des signaux (y, x) d'entrée et de sortie de la voie (S) de transmission étant détectés, les signaux (y) d'entrée étant envoyés à un modèle (M) de simulation de la voie (S) de transmission pour la détermination de signaux (xs) estimés de sortie et les paramètres (p) du modèle (M) de simulation, par lesquels les écarts (d) entre les signaux (x) détectés de sortie et les signaux (xs) de sortie estimés à l'aide du modèle (M) de simulation sont minimums, étant déterminés, caractérisé en ce que

- la voie (S) de transmission comporte une partie qui effectue une intégration,
- le modèle (M) de simulation de la voie (S) de transmission est un modèle I-$T_n$ ou un modèle I-$T_t$,
- des moyens de production d'un signal (y) d'entrée de forme impulsionnelle sont prévus et
- le paramètre (K) d'amplification du modèle (M) de simulation est déterminé en tant que quotient de la différence entre la valeur finale fixe et la valeur initiale du signal (x) de sortie et la surface sous la courbe de forme impulsionnelle du signal (y) d'entrée.

2. Dispositif suivant la revendication 1, caractérisé en ce que

- les moyens produisent un signal (y) d'entrée de la forme d'une impulsion rectangulaire,
- dans le cas d'un modèle I-$T_n$ les paramètres n et T du modèle (M) de simulation sont choisis de sorte à satisfaire à l'équation

$$T = \left( \frac{F}{abK} - \frac{b}{2} \right) \frac{1}{n}$$

- dans le cas d'un modèle I-$T_t$, le paramètre $T_t$ est choisi de sorte à satisfaire à l'équation

$$T_t = \frac{F}{abK} - \frac{b}{2}$$

- F étant la surface comprise entre la valeur finale fixe la courbe mesurée du signal (x) de sortie à partir de l'instant initial de l'impulsion d'entrée,
- a étant la hauteur de l'impulsion d'entrée et
- b étant la largeur de l'impulsion d'entrée.

3. Dispositif suivant la revendication 1 ou 2, caractérisé en ce que

- le signal (y) d'entrée est la grandeur réglante et le signal (x) de sortie est la grandeur réglée dans une boucle de régulation, qui peut être commutée du fonctionnement à la main sur fonctionnement automatique et dans laquelle un régulateur (R), dont le paramètre de réglage pour le fonctionnement automatique est adapté aux paramètres (p) déterminés en fonctionnement manuel, du modèle (M) de simulation, est branché en amont de la voie (S) de transmission.

4. Dispositif d'identification d'un système (S) réglé dans une boucle fermée de régulation, dans laquelle un régulateur (R) est branché en amont du système (S) réglé, les signaux (y, x) d'entrée et de sortie du système (S) réglé étant détectés, les signaux (y) d'entrée étant envoyés à un modèle (M) de simulation du système (S) réglé pour la détermination de signaux (xs) estimés de sortie et les paramètres (p) du modèle (M) de simulation, par lesquels les écarts (d) entre les signaux (x) détectés de sortie et les signaux (xs) de sortie estimés à l'aide du modèle (M) de simulation sont minimums, étant déterminés,
caractérisé en ce que

- le système réglé (S) comporte une partie intégrant,
- le modèle (M) de simulation du système réglé (S) est un modèle I-$T_n$ ou un modèle I-$T_t$ et
- le paramètre K d'amplification du modèle (M) de simulation est déterminé en tant que quotient de la différence entre la valeur finale fixe et la valeur initiale de la grandeur (w) de conduite et la surface sous la courbe du signal (y) d'entrée après un saut de la grandeur (w) de conduite.

5. Dispositif suivant la revendication 3 ou 4, caractérisé en ce que

- dans le cas d'un modèle I-$T_n$ dans un régulateur P, le paramètre $K_p$ du régulateur est réglé à la valeur

$$K_p = \frac{1}{2nKT}$$

- et dans le cas d'un modèle I-$T_t$ le paramètre est réglé à la valeur

$$K_p = \frac{1}{2KT_t}$$

6. Dispositif suivant la revendication 3 ou 4, caractérisé en ce que

- dans le cas d'un modèle I-$T_n$ avec n > 1 dans un régulateur PD, le paramètre $K_p$ de ce régulateur est réglé à la valeur

$$K_p = \frac{3}{4KT\,(n-1)}$$

et le paramètre $T_v$ de ce régulateur est réglé à la valeur

$$T_v = \frac{T(n+2)}{3}$$

- et dans le cas d'un modèle I-$T_t$ le paramètre $K_p$ est réglé à la valeur

$$K_p = \frac{3}{4KT_t}$$

et le paramètre $T_v$ est réglé à la valeur

$$T_v = \frac{T_t}{3}$$

7. Dispositif suivant la revendication 3 ou 4, caractérisé en ce que

- dans le cas d'un modèle I-$T_n$ dans un régulateur PI le paramètre $T_N$ de ce régulateur est réglé à la valeur

$$T_N = T(2n + \sqrt{2n(n+1)})$$

et son paramètre $K_p$ est réglé à la valeur

$$K_p = \frac{2}{K \cdot T_N}$$

- et dans le cas d'un modèle I-$T_t$, le paramètre $T_N$ est réglé à la valeur

$$T_N = T_t(2 + \sqrt{2})$$

et le paramètre $K_p$ est réglé à la valeur

$$K_p = \frac{2}{KT_N}$$

8. Dispositif suivant la revendication 3 ou 4, caractérisé en ce que

- dans le cas d'un modèle I-$T_n$ dans un régulateur PID, les paramètre $K_p$, $T_N$ et $T_v$ de ce régulateur sont réglés aux valeurs

$$T_N = T \frac{10n^2 + 6n - 4 + \sqrt{34n^4 + 90n^3 + 58n^2 - 18n - 20}}{6(n+1)},$$

$$T_v = 2nT - \frac{T_N}{2} - \frac{n(n-1)T^2}{T_N}$$

et

$$K_p = \frac{2}{K(T_N - 2T_v)}$$

- et dans le cas d'un modèle I-$T_t$ ces paramètres sont réglés aux valeurs

$$K_p = \frac{0,98}{KT_t},$$

$$T_N = 2,64T_t$$

et

$$T_v = 0,30T_t$$

# FIG 1

# FIG 2